# NOUVEAU FASCICULE DE BREVET EUROPEEN

(11) **EP 3 103 630 B2**
(45) Date de publication et mention de la décision concernant l'opposition: **19.11.2025**
(45) Mention de la délivrance du brevet: 09.12.2020
(21) Numéro de dépôt: 15425042.7
(22) Date de dépôt: 11.06.2015
(51) Int. Cl.: B29D 35/14, B29D 35/04, B29D 35/00, A43B 5/04, B29C 45/16

(54) **CHAUSSURE DE SPORT CO-INJECTÉE**
KOINJIZIERTER SPORTSCHUH
CO-INJECTED SPORTS SHOE

(43) Date de publication de la demande: 14.12.2016
(73) Titulaire: Rossignol Lange S.R.L., 31044 Montebelluna (IT)
(72) Inventeur: Garbujo, Giuseppe, 31044 Montebelluna (TV) (IT); Posato, Tiziano, 31010 Maser (TV) (IT); Poloni, Massimo, 31044 Montebelluna (TV) (IT); Zandonà, Armando, 31010 Maser (TV) (IT)
(74) Mandataire: Novaimo

(56) Documents cités:
- EP-A1- 0 823 323
- WO-A1-2014/136051
- CA-A1- 2 374 148
- JP-A- H02 126 801
- US-A- 4 245 410
- US-A- 5 667 737

## Description

L'invention concerne un élément d'une chaussure de sport, comme tout ou partie d'une coque, d'un bas de coque ou d'un collier, ou d'une languette, notamment de chaussure de ski alpin ou de ski de fond, et une chaussure de sport en tant que telle comprenant un tel élément. Elle concerne particulièrement tout ou partie d'une chaussure de ski. Elle concerne aussi un procédé de fabrication d'un tel élément de chaussure de sport.

Une chaussure de ski exige d'une part une rigidité et une résistance importantes et d'autre part un niveau de confort élevé. En effet, une telle chaussure subit de nombreux efforts lors de son utilisation et doit par conséquent être dotée d'une bonne résistance. Une forte rigidité est aussi nécessaire pour atteindre une bonne performance de la chaussure qui, en tant qu'intermédiaire entre le skieur et le ski, transmet les efforts du skieur au ski afin de guider ce dernier. Toutefois, ses contraintes au niveau du confort sont aussi élevées. La chaussure doit notamment posséder une souplesse suffisante pour permettre au skieur de l'ouvrir pour la chausser et l'enlever, lui permettre de fléchir ses genoux vers l'avant pour skier, et lui assurer un confort suffisant malgré son utilisation dans les conditions extrêmes de température et dans un environnement humide et agressif.

Il est connu de répondre à ces contraintes sur la base d'éléments de chaussures comprenant un ou plusieurs matériaux plastiques. De façon générale, les chaussures comportent des zones plastiques rigides situées à l'extérieur, qui recouvrent partiellement ou intégralement un chausson ou tige de confort plus souple assurant le confort.

Un premier procédé de fabrication d'un élément de chaussure de sport ou d'une chaussure de sport de l'état de la technique consiste à fabriquer séparément différents sous-éléments plastiques par injection, puis à les assembler mécaniquement. L'inconvénient d'un tel procédé est qu'il nécessite un temps de fabrication élevé et est coûteux, puisqu'il nécessite un moule spécifique pour chaque sous-élément, un stockage des différents sous-éléments fabriqués séparément puis une étape d'assemblage mécanique de ces sous-éléments.

Un autre procédé de fabrication de chaussure de sport de l'état de la technique consiste à utiliser la technique de la bi-injection, qui consiste en la fabrication d'une paroi de chaussure par l'injection d'une première couche d'un premier matériau plastique puis en la surinjection, directement sur cette première couche toujours disposée sur la partie interne de son moule, après son refroidissement et son durcissement et après changement de la partie externe du moule, d'une seconde couche dans le même matériau ou dans un matériau plastique dit "compatible" avec celui de la première couche, afin d'obtenir une soudure naturelle des deux matériaux plastiques au niveau de leurs surfaces superposées. Avec cette technique, un temps suffisant est prévu avant la seconde injection, de sorte que le premier matériau plastique a le temps de durcir avant la seconde injection : les deux couches injectées restent ainsi distinctes, ne se mélangent pas, sont juxtaposées et/ou superposées. Cette solution permet d'obtenir des chaussures dont la paroi possède des propriétés mécaniques et une esthétique variables en ses différents points grâce à la combinaison de deux matériaux qui peuvent avoir des propriétés mécaniques différentes, comme leur rigidité, ainsi que des aspects variés. Cependant, ce procédé nécessite un moule externe spécifique supplémentaire. En effet, avant la surinjection du deuxième matériau, il est nécessaire de changer la partie externe du moule, ce qui implique des temps de cycles de production ainsi que des coûts de fabrication des moules supplémentaires. Un autre inconvénient lié à ce procédé réside dans la cohésion de la matière au niveau de la frontière entre les deux matériaux. En effet, on constate que la liaison entre les deux matériaux peut être fragile. Les documents JP H02 126801 A et US 4 245 410 A montrent des techniques de fabrication de chaussures de sport par des procédés similaires. On connait également les chaussures Nordica Ace of Spades et Scott Powerfit G1 130 WTR.

Aussi, il existe un besoin d'amélioration des chaussures de sport existantes et de leur procédé de fabrication.

Un premier objet de la présente invention consiste en une chaussure de sport qui permet son chaussage et son déchaussage facile, pour atteindre un confort acceptable tout en offrant une bonne rigidité répartie dans les zones adéquates afin d'obtenir une chaussure performante selon son utilisation.

Un second objet de la présente invention consiste à proposer une chaussure de sport dont le procédé de fabrication reste simple et peu coûteux.

Un troisième objet de l'invention consiste à proposer une chaussure de sport dont l'esthétique est attrayante.

Selon le concept de l'invention, la paroi d'un élément de chaussure de sport comprend :
- une première zone comprenant deux matériaux plastiques différents dans son épaisseur, le premier matériau plastique formant deux couches de la paroi constituant les faces interne et externe de ladite paroi, et le second matériau plastique étant intercalé entre les deux couches du premier matériau plastique, et
- une seconde zone comprenant uniquement le second matériau plastique.

L'invention est plus précisément définie par les revendications.

Ces objets, caractéristiques et avantages de la présente invention seront exposés en détail dans la description suivante de modes d'exécution particuliers illustrés sur une chaussure de ski alpin faits à titre non-limitatif en relation avec les figures jointes parmi lesquelles :
- La figure 1 représente une vue de côté d'une chaussure de ski selon un mode de réalisation de l'invention.
- La figure 2 représente une vue de côté d'un bas de coque de chaussure de ski selon un mode de réalisation de l'invention.
- La figure 3 représente une vue de côté d'un bas de coque de chaussure de ski selon un premier mode de réalisation de l'invention.
- La figure 4 représente une vue de face en coupe transverse par un plan vertical au niveau de la partie avant du bas de coque de chaussure de ski selon le premier mode de réalisation de l'invention.
- La figure 5 représente une vue arrière en coupe transverse par un plan vertical au niveau de la partie arrière du bas de coque de chaussure de ski selon le premier mode de réalisation de l'invention.
- La figure 6 représente une vue de dessus en coupe par un plan horizontal au niveau de la partie supérieure du bas de coque de chaussure de ski selon le premier mode de réalisation de l'invention.
- La figure 7 représente une vue de côté d'un bas de coque de chaussure de ski selon un second mode de réalisation de l'invention.
- La figure 8 représente une vue de face en coupe transverse par un plan vertical au niveau de la partie avant du bas de coque de chaussure de ski selon le second mode de réalisation de l'invention.
- La figure 9 représente une vue arrière en coupe transverse par un plan vertical au niveau de la partie arrière du bas de coque de chaussure de ski selon le second mode de réalisation de l'invention.
- La figure 10 représente une vue de dessus en coupe par un plan horizontal au niveau de la partie supérieure du bas de coque de chaussure de ski selon le second mode de réalisation de l'invention.
- La figure 11 représente une vue de côté d'un bas de coque de chaussure de ski selon un troisième mode de réalisation de l'invention.
- La figure 12 représente une vue arrière en coupe transverse par un plan vertical au niveau de la partie arrière du bas de coque de chaussure de ski selon le troisième mode de réalisation de l'invention.
- La figure 13 représente une vue de dessus en coupe par un plan horizontal au niveau de la partie supérieure du bas de coque de chaussure de ski selon le troisième mode de réalisation de l'invention.
- La figure 14 représente une vue de côté d'un bas de coque de chaussure de ski selon un quatrième mode de réalisation de l'invention.
- La figure 15 représente une vue de face en coupe transverse par un plan vertical au niveau de la partie avant du bas de coque de chaussure de ski selon le quatrième mode de réalisation de l'invention.
- La figure 16 représente une vue de dessus en coupe par un plan horizontal au niveau de la partie supérieure du bas de coque de chaussure de ski selon le quatrième mode de réalisation de l'invention.
- La figure 17 représente une vue de côté d'un collier de chaussure de ski selon un premier mode de réalisation de l'invention.
- La figure 18 représente une vue arrière du collier de chaussure de ski selon le premier mode de réalisation de l'invention.
- La figure 19 représente une vue de côté en coupe par un plan vertical médian du collier de chaussure de ski selon le premier mode de réalisation de l'invention.
- La figure 20 représente une vue de dessus en coupe par un plan horizontal du collier de chaussure de ski selon le premier mode de réalisation de l'invention.
- La figure 21 représente une vue de côté d'un collier de chaussure de ski selon un second mode de réalisation non revendiqué.
- La figure 22 représente une vue arrière du collier de chaussure de ski selon le second mode de réalisation non revendiqué.
- La figure 23 représente une vue de côté en coupe par un plan vertical médian du collier de chaussure de ski selon le second mode de réalisation non revendiqué.
- La figure 24 représente une vue de dessus en coupe par un plan horizontal en partie basse du collier de chaussure de ski selon le second mode de réalisation non revendiqué.
- La figure 25 représente une vue de côté d'un collier de chaussure de ski selon un troisième mode de réalisation non revendiqué.
- La figure 26 représente une vue arrière du collier de chaussure de ski selon le troisième mode de réalisation non revendiqué.
- La figure 27 représente une vue de côté en coupe par un plan vertical médian du collier de chaussure de ski selon le troisième mode de réalisation non revendiqué.
- La figure 28 représente une vue de dessus en coupe par un plan horizontal en partie haute du collier de chaussure de ski selon le troisième mode de réalisation non revendiqué.
- La figure 29 représente une vue de dessus en coupe par un plan horizontal en partie basse du collier de chaussure de ski selon le troisième mode de réalisation non revendiqué.
- La figure 30 représente une vue en perspective avant du collier de chaussure de ski selon le premier mode de réalisation de l'invention.

Dans la description suivante, nous utiliserons les mêmes références pour les différentes variantes de réalisation pour désigner des mêmes caractéristiques. La direction verticale désigne la direction de bas en haut, c'est-à-dire de la semelle de la chaussure vers le haut de la chaussure. La direction horizontale désigne la direction perpendiculaire à la direction verticale, parallèle à un plan sur lequel repose la semelle de la chaussure.

D'autre part, nous appellerons face externe d'un élément de chaussure sa surface orientée vers l'extérieur de la chaussure et face interne une surface orientée vers l'intérieur de la chaussure, du côté du pied.

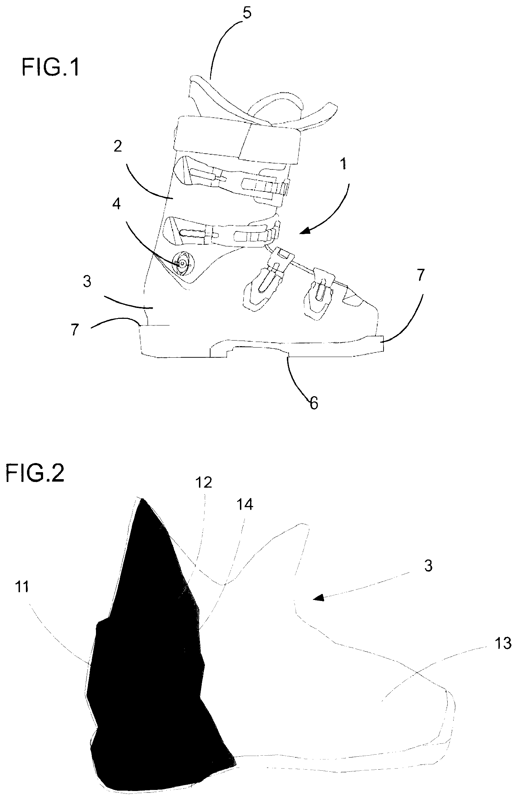

La figure 1 illustre une chaussure de ski alpin 1 selon un mode de réalisation de l'invention, qui comprend une coque externe rigide formée de plusieurs matériaux plastiques injectés comme cela sera détaillé ci-dessous, comprenant notamment deux éléments, un collier 2 articulé sur un bas de coque 3 autour d'un axe de liaison 4. Le bas de coque 3 s'étend de la semelle de marche 6 jusqu'au niveau de l'axe d'articulation 4 et de liaison avec le collier 2 dans la direction verticale. Un chausson de confort 5 est inséré dans la coque rigide. La semelle 6 est prolongée vers ses deux extrémités avant et arrière par des trottoirs 7 de format adapté pour la coopération avec les mâchoires d'un dispositif de fixation de chaussure de ski. La surface de marche de la semelle de marche 6, en contact avec le sol lors de la marche, peut être réalisée directement monobloc sur le bas de coque, ou rapportée, par exemple en utilisant des talonnettes rapportées, à l'avant et/ou à l'arrière.

Les modes de réalisation de l'invention qui vont être décrits reposent sur un procédé de fabrication d'un élément de chaussure, comme par exemple un bas de coque 3 ou un collier 2 d'une chaussure de ski, qui comprend au moins deux étapes d'injection mettant en œuvre un principe de co-injection, de respectivement deux matériaux plastiques différents. On entendra par différents des matériaux ayant des rigidités différentes.

Le procédé utilisé ici est un procédé de co-injection, dans lequel au moins deux matériaux plastiques sont injectés dans le même moule, par au moins deux points d'injection qui voit le passage d'au moins deux matériaux différents successivement. Ces deux matériaux sont en particulier des matériaux plastiques, éventuellement chargés en fibres, par exemple en fibres de verre, de carbone...

La co-injection repose sur au moins deux étapes successives d'injection de matériaux plastiques dans un seul moule, ces deux étapes étant suffisamment rapprochées pour induire une imbrication du second matériau injecté à travers le premier matériau injecté. Pour cela, le premier matériau 15 est injecté dans le moule. Il reste suffisamment fluide au moment de l'injection du second matériau 16 au travers du premier matériau dans le même moule, notamment au niveau de sa surface interne qui reste chaude plus longtemps que ses surfaces externes, qui se refroidissent plus vite au contact des parois du moule d'injection. L'imbrication mentionnée se manifeste de deux manières. D'abord, le second matériau injecté pénètre partiellement dans la couche formée par le premier matériau injecté par la première injection. En effet, du fait de l'état encore suffisamment liquide et fluide de cette première couche, le second matériau pénètre au travers de la surface interne de cette couche mentionnée sous l'effet de l'énergie importante lors de son injection et vient s'étendre dans l'épaisseur de la première couche, formant finalement une zone de paroi dite « sandwich » dans laquelle le second matériau injecté se trouve enfermé entre deux couches du premier matériau injecté. Ensuite, le second matériau injecté transporte une partie du premier matériau de la première injection, au-delà de sa position atteinte lors de la première injection, jusqu'à une zone frontière où les deux matériaux sont sensiblement mélangés et alternés, avant que le second matériau ne poursuive son déplacement seul au-delà de cette zone frontière. Il se créée ainsi une zone frontière ou zone intermédiaire entre les deux matériaux qui ne présente pas une limite nette ou linéaire. Notamment, le premier matériau étant entraîné de manière irrégulière, il peut former des formes de type « flammes », de direction définie par la direction d'injection du second matériau, au niveau de la frontière au-delà de laquelle le premier matériau injecté disparaît. Dans cette zone frontière, le deuxième matériau peut ponctuellement atteindre les parois externes de l'élément en alternance éventuelle avec le premier matériau. De même dans cette zone frontière, le premier matériau pourrait ponctuellement pénétrer partiellement dans la partie centrale du deuxième matériau. Pour optimiser le comportement de la chaussure il est intéressant de réduire la taille de la zone frontière. Entre deux éléments co-injectés selon l'invention, dans les mêmes conditions théoriques et dans le même moule, le positionnement de la zone frontière peut fluctuer d'environ un centimètre. Ainsi, cette solution permet également, dans le cas de matériaux de couleurs différentes, d'atteindre un effet esthétique original et attractif.

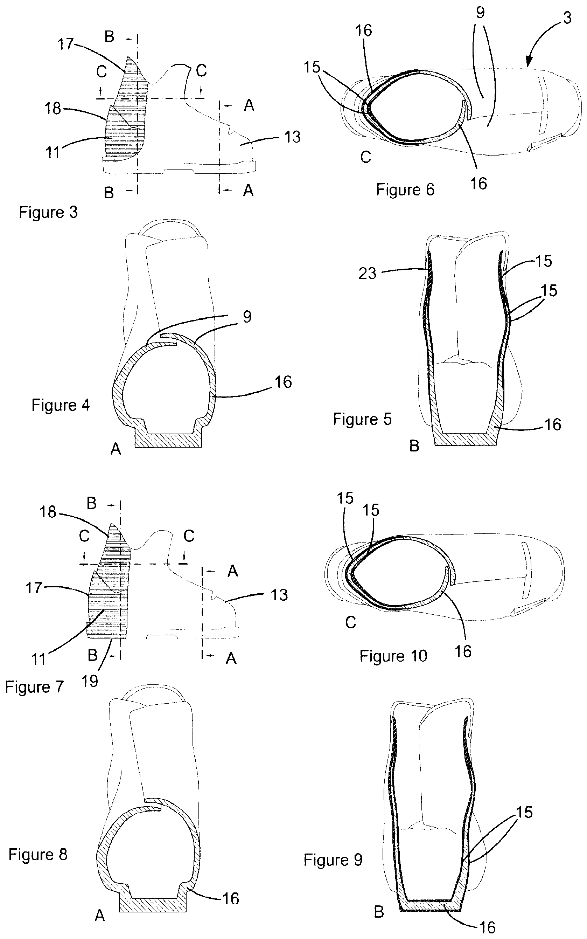

A titre d'exemple, la figure 2 illustre un bas de coque 3 de chaussure de ski obtenue selon un mode de réalisation de l'invention, similaire au second mode de réalisation décrit plus loin en relation avec les figures 7 à 10. Les deux matériaux utilisés sont représentés sur les figures par deux couleurs différentes, respectivement foncée et blanche, et sont tous les deux visibles sur la face externe du bas de coque. Ces deux matériaux constituent la paroi du bas de coque 3 mais sont répartis de façon particulière sur les faces externes et internes du bas de coque, ainsi que dans l'épaisseur de la paroi. Sur une première zone 11 arrière du bas de coque 3, le premier matériau occupe la face externe du bas de coque, alors que sur une seconde zone 13 avant, le second matériau occupe la face externe du bas de coque. Comme explicité précédemment, la frontière 14 entre les deux zones 11, 13 n'est pas nette, présente des discontinuités et/ou une forme ou une ligne présentant des fortes oscillations ou irrégularités, non lisses, délimitant ainsi une surface de part et d'autre non totalement convexe ou concave. D'autre part, la zone intermédiaire 12 au niveau de la frontière 14 comprend un mélange des deux matériaux, ce qui se répercute par une zone de rigidité intermédiaire et fluctuante ou par une couleur dégradée et/ou une alternance aléatoire entre les deux couleurs. Ainsi, en utilisant deux matériaux de propriétés mécaniques différentes et également de couleurs différentes, le procédé permet d'atteindre un aspect esthétique intéressant. En variante, les zones 11, 12, 13 pourraient occuper toute autre surface du bas de coque. La première zone 11 consiste en une paroi de type « sandwich », qui comprend le second matériau (représenté de couleur blanche) intercalé entre deux couches du premier matériau (représenté de couleur foncée). Ce premier matériau constitue les deux faces externe et interne de la paroi du bas de coque 3, qui respectivement forment la face extérieure de la coque et la face intérieure de la coque située en regard du pied. En remarque, le second matériau est donc invisible de l'extérieur et de l'intérieur du bas de coque dans la première zone 11, car contenu entre deux couches formées par le premier matériau injecté. La seconde zone 13 ne comprend que le second matériau dans toute l'épaisseur de la paroi du bas de coque, et devient donc visible à la fois depuis l'extérieur et depuis l'intérieur de cette zone du bas de coque 3.

Selon un mode de réalisation, la température du moule d'injection est portée entre 50 et 60 °C durant les injections. De plus, le temps entre les deux injections est compris entre 3 et 6 secondes, avantageusement 4 ou 5 secondes. Ce temps peut être allongé si la température du moule augmente, ou inversement raccourci si elle diminue.

Selon l'invention, il y a plusieurs points d'injection, les points d'injection recevant deux injections successives, selon la technique de co-injection explicitée précédemment pour chacun d'entre eux. Afin de mieux contrôler la dispersion de la matière dans le moule, d'autres points d'injection peuvent recevoir soit l'injection d'un seul des deux matériaux, soit les deux injections successives, selon la technique de co-injection. Par exemple, dans le cas de deux points d'injection réalisant la co-injection, le premier matériau est injecté en même temps via les deux points d'injection, puis le deuxième matériau est injecté à son tour via les deux mêmes points d'injection, à travers le premier matériau injecté. A titre d'exemple, la réalisation représentée en figure 2 peut être obtenue par deux points d'injection positionnés sur deux hauteurs différentes en zone arrière du bas de coque, recevant chacun les deux injections successives selon la co-injection expliquée précédemment.

Le second matériau s'étend donc de façon continue de l'extrémité arrière de la première zone 11 jusqu'à l'extrémité avant de la seconde zone 13, mais n'est visible sur le bas de coque 3 uniquement dans la seconde zone 13.

Comme mentionné plus haut, les deux matériaux utilisés dans le procédé de fabrication sont différents. Cette différence peut devenir apparente du fait de couleurs différentes, pour obtenir l'effet visuel explicité précédemment en relation avec la figure 2. Nous entendons le terme « couleur » au sens large, c'est-à-dire tout aspect particulier, incluant un aspect transparent ou translucide. Selon l'invention, deux matériaux de rigidité différente sont utilisés, pour obtenir une paroi dont la rigidité varie selon les zones de l'élément de chaussure, pour atteindre un compromis choisi en fonction des exigences de performance et de confort rappelées précédemment de l'élément de chaussure. En remarque, ces deux matériaux de rigidité différente peuvent être de couleur différente ou non.

Selon l'invention, le premier matériau est plus rigide que le second, et est positionné de préférence dans les zones de l'élément de chaussure nécessitant plus de rigidité : ces zones seront détaillées sur les exemples décrits plus loin. Le second matériau est plus souple, et se trouvera seul dans les zones nécessitant plus de souplesse. Avantageusement, l'écart de rigidité entre les deux matériaux est supérieur ou égal à 5 ShD. A titre d'exemples, le premier matériau peut être du polyuréthane de dureté comprise entre 50 et 70 ShD inclus, de préférence entre 55 et 60 ShD inclus, ou tout autre matériau plastique de dureté équivalente, alors que le second matériau peut être du polyuréthane de dureté comprise entre 40 et 60 ShD inclus, de préférence entre 45 et 50 ShD inclus, ou tout autre matériau plastique de dureté équivalente. Les deux matériaux ont une rigidité différente, et sont de préférence de dureté différente, ou différents. Par exemple, le premier matériau peut être du polyuréthane et le second du polyamide ou un Polyéther bloc-amide. En variante, le matériau plastique utilisé peut être différent, comme une polyoléfine. Avec cette approche, la zone comprenant une paroi de l'élément de chaussure de type « sandwich » présente la particularité d'avoir une dureté variant en fonction de l'épaisseur de la paroi, avec notamment une partie intermédiaire moins dure que les deux couches interne et externe du sandwich dans le cas où le premier matériau injecté est plus rigide que le second.

De plus, la quantité utilisée pour chacun des deux matériaux n'est pas quelconque. En effet, la quantité injectée de premier matériau doit être inférieure à la quantité pour laquelle le premier matériau occuperait toute la surface du moule, ou presque toute la surface, auquel cas le second matériau injecté ne pourrait pas atteindre les faces externes de la paroi dans la seconde zone, et auquel cas le premier matériau imposerait une rigidité relativement constante de la paroi de la chaussure ou en tous cas variant sur une plage nettement inférieure à celle recherchée par l'invention. Ainsi, la quantité de premier matériau injecté est telle qu'il ne s'étend pas sur toute la surface de l'élément injecté, et de préférence sur moins de 75%, voire moins de 50%, de la surface de l'élément injecté. Il s'avère qu'un mode de réalisation avantageux consiste à injecter une quantité de premier matériau représentant en poids 50% ou moins du poids total de l'élément de chaussure après sa finalisation, voire 40% ou moins, ou 30% ou moins de ce poids total. La seconde injection du second matériau peut alors former tout le poids restant, voire une partie seulement s'il est prévu plus de deux matériaux injectés.

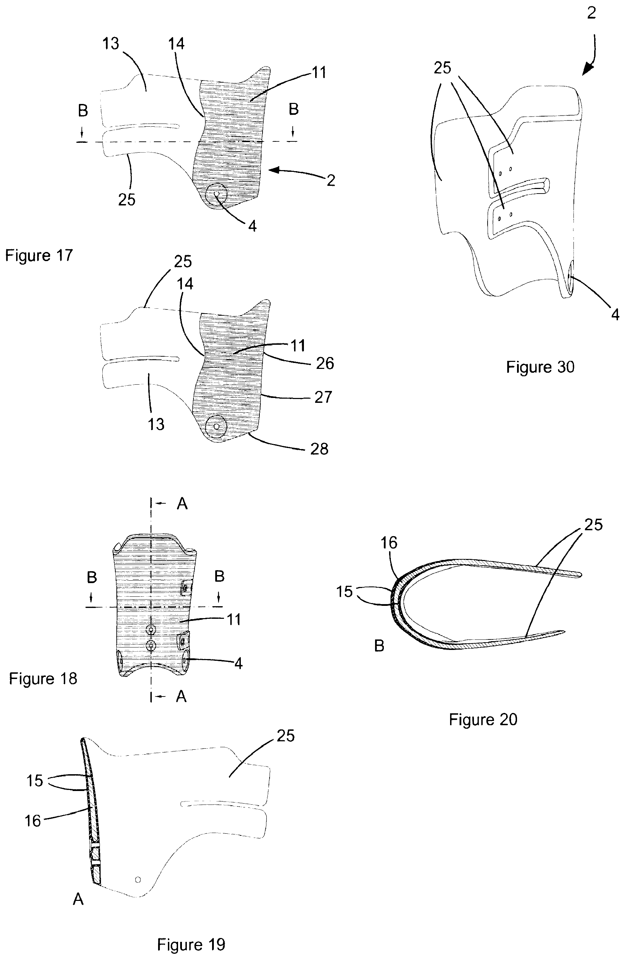

Dans toutes les variantes de réalisation qui vont être décrites de manière plus détaillée en relation avec les figures 3 à 29, le premier matériau injecté est représenté de couleur foncée et est plus rigide et plus dur que le second. Les premier et second matériaux peuvent être choisis de la même couleur ou de couleurs différentes. Naturellement, d'autres variantes non représentées peuvent facilement être obtenues. Par exemple, les première et deuxième zones peuvent être réalisées dans des parties différentes de la chaussure. Dans toutes les illustrations, la frontière 14 est représentée par une ligne lissée pour une raison de simplification, ce qui ne correspond pas précisément à la réalité selon les explications précédentes. Les figures 3 à 16 illustrent plusieurs modes de réalisation d'un bas de coque de chaussure de ski, et les figures 17 à 29 représentent plusieurs modes de réalisation d'un collier de chaussure de ski.

Les figures 3 à 6 illustrent une première réalisation d'un bas de coque 3 de chaussure de ski. Dans cette réalisation, la première zone 11 comprenant la paroi de type « sandwich », particulièrement visible sur les coupes des figures 4 et 5 sur lesquelles on peut distinguer les deux matériaux 15, 16, s'étend en partie arrière du bas de coque. Le second matériau 16 est présent dans la partie centrale du sandwich, le premier matériau 15 formant les deux couches extérieures du sandwich, les deux faces interne et externe de la paroi du bas de coque. Elle permet de former une paroi rigide, du fait de la présence du premier matériau injecté 15, qui garantit un bon maintien du pied du skieur et donne à la chaussure une rigidité suffisante dans sa partie arrière. La partie frontale, notamment au niveau du cou de pied, est obtenue par deux rabats 9 en matériau plus souple, puisqu'uniquement formés par le second matériau 16 injecté comme illustré sur la figure 4. Dans cette réalisation, deux points d'injection 17, 18 disposés sur deux hauteurs différentes de la partie arrière du bas de coque sont utilisés. Ces deux points d'injection reçoivent les deux matériaux successivement.

En remarque, une quatrième zone 23 dans la paroi de chaussure ne comprenant que le premier matériau injecté peut exister comme illustré sur la figure 5. Cette zone est située au niveau de l'extrémité supérieure du bas de coque, d'épaisseur très fine. Ceci est obtenu car le moule est peu épais à cet endroit-là et le premier matériau injecté refroidit vite au contact des parois du moule, et empêche ainsi la pénétration du deuxième matériau au sein du premier matériau. En remarque, nous appellerons « semelle » la partie inférieure du bas de coque, formant au moins une partie de la future semelle de marche de la chaussure de ski. En général, cette semelle sera complétée par l'ajout de composants complémentaires pour former la structure finale de la semelle de marche de la chaussure

Les figures 7 à 10 illustrent une seconde réalisation dans laquelle le premier matériau s'étend jusqu'à la partie basse du bas de coque et forme également le trottoir arrière de la chaussure. Elle est obtenue avec deux points d'injection 17, 18 toujours situés en partie arrière du bas de coque, ainsi qu'avec éventuellement un point d'injection 19 situé sous la semelle du bas de coque à proximité du talon, et une quantité de premier matériau 15 supérieure à celle utilisée dans la réalisation précédente.

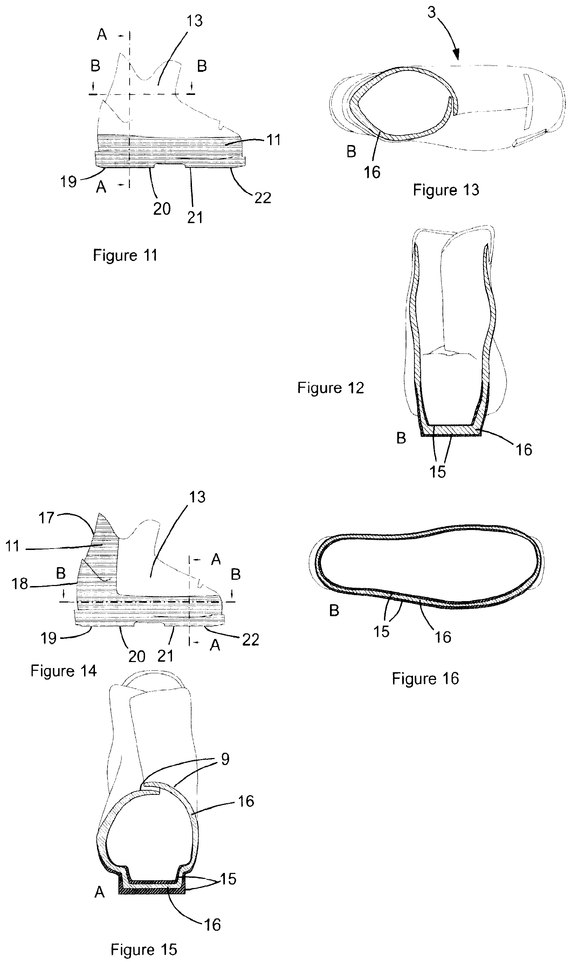

Les figures 11 à 13 illustrent une troisième réalisation dans laquelle le premier matériau 15 présent dans la première zone 11 s'étend en partie basse du bas de coque, et comprend notamment toute la semelle du bas de coque. En particulier ce premier matériau 15 est plus rigide et forme les trottoirs 7. De préférence la rigidité des matériaux sera choisie pour atteindre une dureté des trottoirs 7 de la semelle de marche 6 supérieure à 45 ShD pour les enfants et supérieure à 50 ShD pour les adultes. La semelle est obtenue avec quatre points d'injection 19, 20, 21, 22 situés sous la semelle, voire par cinq points d'injection. Toute la partie supérieure du bas de coque située au-dessus de la première zone 11 forme la seconde zone 13 et est constituée d'une paroi monomatière formée par le second matériau 16.

Les figures 14 à 16 illustrent une quatrième réalisation qui correspond à la combinaison de la première ou seconde réalisation avec la troisième. Le premier matériau 15 présent dans la première zone 11 s'étend en parties basse et arrière du bas de coque. Ce bas de coque est obtenu avec deux points d'injection 17, 18 situés en partie arrière du bas de coque et quatre points d'injection 19, 20, 21, 22 situés sous la semelle du bas de coque. Ainsi, dans cette réalisation, la partie plus souple formée dans la seconde zone 13 par le deuxième matériau 16 est localisée uniquement dans la zone des rabats 9 pour faciliter le chaussage de la chaussure.

Les figures 17 à 20 et 30 illustrent une première réalisation d'un collier de chaussure de ski destiné à entourer et serrer le bas de jambe de l'utilisateur. Ce collier est constitué d'une partie arrière prolongée sur l'avant par deux rabats 25 destinés à se superposer et à se rabattre sur l'avant de la jambe du skieur. Ce collier est constitué de zones de rigidité variables. Ce collier présente une surface arrière, visible sur la figure 18, sur laquelle s'étend la première zone 11 qui est formée par une paroi de type sandwich composée d'un multicouche composé, de l'extérieur vers l'intérieur de la paroi, du matériau rigide 15, du matériau souple 16, et de nouveau du matériau rigide 15. Cette première zone est prolongée par les deux rabats 25 latéraux. Pour cela, la partie antérieure de ces rabats 25 est plus souple, et ne comprend que le second matériau 16. En remarque, la première zone 11 rigide s'étend aussi au niveau des axes d'articulation 4 du collier. Ce collier est obtenu avec trois points d'injection 26, 27, 28 situés en partie arrière du collier.

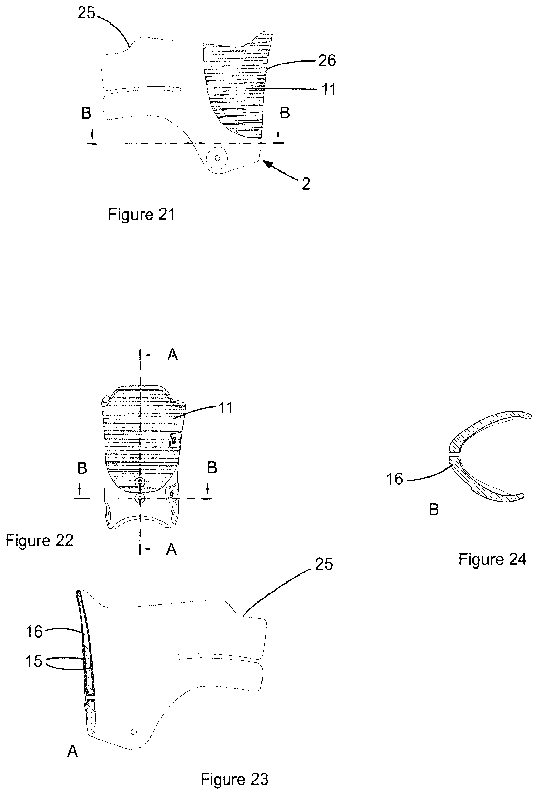

Les figures 21 à 24 illustrent une seconde réalisation d'un collier de chaussure de ski non revendiqué. Cette seconde réalisation comprend toujours la première zone 11 en partie arrière du collier, mais qui ne s'étend pas jusqu'en bas du collier. Ce collier est obtenu avec un point d'injection 26 situé en partie arrière du collier. Une vue en coupe de la partie haute de cette seconde réalisation d'un collier est celle illustrée à la figure 21.

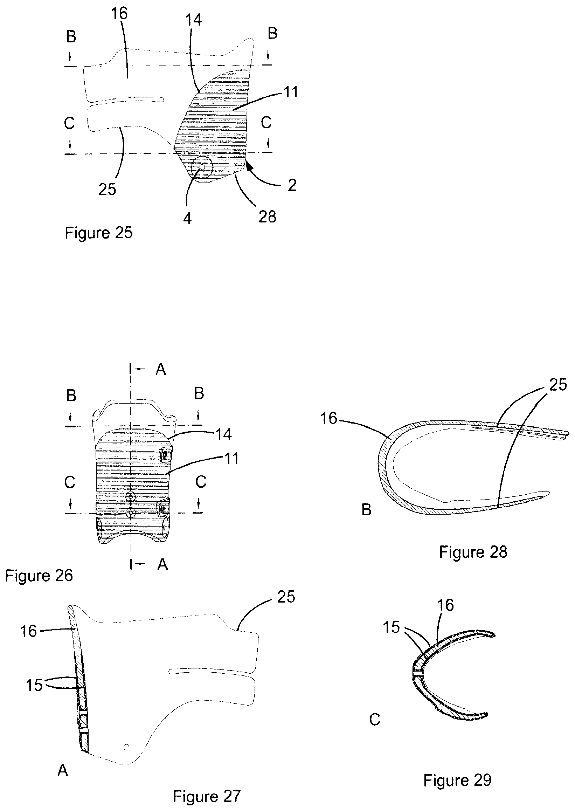

Les figures 25 à 29 illustrent une troisième réalisation d'un collier de chaussure de ski non revendiqué. Cette troisième réalisation comprend toujours la première zone 11 en partie arrière du collier, mais qui ne s'étend qu'en partie basse du collier, pas jusqu'en haut du collier. En remarque, la première zone 11 rigide s'étend aussi au niveau des axes d'articulation 4 du collier. Ce collier est obtenu avec un point d'injection 28 situés en partie arrière du collier.

De façon générale l'invention permet de façon avantageuse d'obtenir un collier qui présente deux zones distinctes de rigidités différentes pour optimiser une partie souple localisée dans la zone des rabats 25 favorisant le chaussage et le confort, et une zone arrière plus rigide assurant le maintien de la jambe et évitant les déformations du collier vers l'arrière lors de l'évolution en ski.

Dans tous ces procédés de fabrication permettant d'obtenir les produits illustrés, les différents points d'injection envisagés reçoivent deux injections successives selon le principe de co-injection. Le premier matériau est injecté simultanément au travers des différents points d'injection, puis après un temps très court, le deuxième matériau est injecté simultanément au travers des mêmes points d'injection, pour réaliser la co-injection.

L'invention porte aussi sur un élément ou une chaussure dont la paroi comprend au moins deux matériaux plastiques différents, dont une première zone 11 comprenant les deux matériaux plastiques différents dans son épaisseur, le premier matériau plastique occupant la face externe de la paroi, visible depuis l'extérieur de l'élément de chaussure et le second matériau plastique étant intercalé entre deux couches du premier matériau plastique, et une seconde zone 13 comprenant uniquement le second matériau plastique. La première zone 11 comprend donc le premier matériau 15 plastique formant deux couches de la paroi, constituant les faces interne et externe de ladite paroi, et le second matériau 16 plastique est intercalé entre les deux couches du premier matériau 15 plastique. En remarque, le second matériau 16 s'étend de façon continue de la première zone 11 jusqu'à la seconde zone 13, au sein de la paroi de l'élément, même s'il n'est pas visible au niveau de la première zone.

Selon un mode de réalisation, l'élément de chaussure comprend une troisième zone intermédiaire dans laquelle les deux matériaux sont mélangés, apparaissant alternativement et de manière irrégulière, ou de manière mélangée, sur la surface externe visible de la paroi de l'élément. Cette troisième zone intermédiaire est située entre la première zone constituée d'une structure sandwich et la deuxième zone constituée uniquement du deuxième matériau. Enfin, l'élément peut comprendre une quatrième zone sur laquelle la paroi ne comprend que le premier matériau, localisée en particulier sur les bordures minces de l'élément.

Selon une autre variante de réalisation, l'élément de chaussure peut comprendre plus de deux matériaux plastiques injectés, un troisième matériau étant par exemple surinjecté sur l'ensemble co-injecté décrit précédemment. Par ailleurs, trois matériaux pourraient être co-injectés pour former une zone composée d'un sandwich formé de cinq couches, puis une zone composée d'un sandwich formé de trois couches, suivie d'une zone monomatière, cette zone monomatière formant la partie centrale de chacun des sandwichs. Des réalisations à N matériaux pourraient être envisagées sur le même principe.

Le concept de l'invention peut bien sûr être mis en œuvre pour tout élément de chaussure, de type bas de coque ou collier comme décrit, mais aussi semelle, sangle ou bouderie, languette destinée à une coque ou à un chausson de confort, renfort talon d'une chaussure de ski de fond, ou autres pièces plastiques nécessitant par endroits soit une rigidité élevée, soit une bonne souplesse. En particulier, dans le cas d'une languette, de préférence la partie souple serait positionnée dans la partie inférieure de la languette, dans la zone du cou de pied, et alors formée par le deuxième matériau, tandis que la partie supérieure plus rigide dans la zone du tibia serait formée par le sandwich composé des premier et deuxième matériaux. L'invention porte aussi sur toute chaussure de sport intégrant un tel élément. Cette chaussure de sport peut être toute chaussure de sport de glisse, comme une chaussure de ski, un patin, etc. Enfin, les différentes variantes décrites ci-dessus peuvent être combinées.

Le procédé selon l'invention permet avantageusement de fabriquer une série de chaussures de sport d'aspects différents, permettant de visualiser en particulier les zones de rigidité différentes de la chaussure. L'invention a été décrite avec l'utilisation d'un premier matériau plus rigide que le deuxième matériau.

Le procédé selon l'invention permet avantageusement de fabriquer une série de chaussures de sport avec un niveau de performance différent en utilisant un même moule, puisqu'il suffit de modifier légèrement les paramètres de co-injection et en particulier les quantités de matière du premier et du deuxième matériau, et/ou les matériaux choisis pour obtenir une multitude de résultats différents du point de vue de la rigidité.

Le moule peut être chauffé localement pour maintenir les matériaux injectés dans un état fluide et mieux contrôler leur répartition dans l'élément. Inversement, il est possible de refroidir le moule localement.

L'invention permet alors d'augmenter la rigidité de certaines zones qui nécessitent une forte rigidité, tout en maintenant un bon niveau de souplesse dans d'autres zones. On obtient ainsi des éléments de chaussure avec le meilleur compromis entre rigidité et souplesse.

Finalement, la solution selon l'invention présente donc les avantages suivants :
- la co-injection permet d'obtenir un résultat satisfaisant en termes de performance, formant des parties souples et des parties rigides dans des zones choisies de la paroi d'un élément de chaussure de sport ;
- elle permet aussi d'obtenir des aspects esthétiques originaux, variés, et attractifs ;
- elle peut être mise en œuvre facilement, permettant la fabrication rapide et à moindre coût d'un élément de chaussure de sport, en particulier en diminuant le nombre de moules d'injection utilisés.

## Revendications

1. Élément de chaussure de sport, dont la paroi comprend au moins deux matériaux (15, 16) plastiques différents co-injectés au travers de plusieurs points d'injection recevant deux injections successives selon la technique de la co-injection, **caractérisé en ce que** la paroi comprend :
- une première zone (11) comprenant les deux matériaux plastiques différents dans son épaisseur, le premier matériau (15) plastique formant deux couches de la paroi constituant les faces interne et externe de ladite paroi, et le second matériau (16) plastique étant intercalé entre les deux couches du premier matériau (15) plastique, et
- une seconde zone (13) comprenant uniquement le second matériau plastique (16),
le premier matériau étant plus rigide que le second matériau.

2. Élément de chaussure de sport selon la revendication précédente, **caractérisé en ce que** le second matériau (16) s'étend de façon continue de la première zone (11) jusqu'à la seconde zone (13).

3. Élément de chaussure de sport selon la revendication précédente, **caractérisé en ce que** sa paroi comprend une frontière (14) irrégulière, non lisse, entre les deux zones (11, 13) et/ou une zone intermédiaire (12) comprenant sur la surface externe visible de l'élément un mélange des deux matériaux (15, 16) et/ou une alternance entre les deux matériaux.

4. Élément de chaussure de sport selon l'une des revendications précédentes, **caractérisé en ce que** le premier matériau représente 50% ou moins du poids total de l'élément de chaussure, voire 40% ou moins, voire 30% ou moins.

5. Élément de chaussure de sport selon l'une des revendications précédentes, **caractérisé en ce que** le premier matériau plus rigide présente une dureté comprise entre 50 et 70 ShD inclus, voire entre 55 et 60 ShD inclus, et/ou **en ce que** le second matériau plus souple présente une dureté comprise entre 40 et 60 ShD inclus, voire entre 45 et 50 ShD inclus.

6. Élément de chaussure de sport selon l'une des revendications précédentes, **caractérisé en ce que** le premier matériau plus rigide forme les trottoirs de la chaussure.

7. Élément de chaussure de sport selon l'une des revendications précédentes **caractérisé en ce qu'**il est un bas de coque (3).

8. Élément de chaussure de sport selon la revendication précédente, **caractérisé en ce que** le bas de coque (3) présente une première zone (11) plus rigide en partie arrière et/ou en partie basse du bas de coque, et présente une seconde zone (13) plus souple au niveau de rabats (9) et/ou du cou de pied.

9. Élément de chaussure de sport selon l'une des revendications 1 à 6, **caractérisé en ce qu'**il est un collier de chaussure de sport.

10. Élément de chaussure de sport selon la revendication précédente, **caractérisé en ce qu'**il est un collier (2) de chaussure de sport et présente une première zone (11) plus rigide en partie arrière et présente une seconde zone (13) plus souple au niveau de rabats (25) latéraux.

11. Chaussure de sport, notamment chaussure de ski, **caractérisée en ce qu'**elle comprend au moins un élément selon l'une des revendications précédentes.

12. Procédé de fabrication d'un élément de chaussure de sport selon l'une des revendications 1 à 10, **caractérisé en ce qu'**il comprend les étapes suivantes :
- injection d'un premier matériau (15) plastique dans un moule, n'occupant pas toute la surface du moule et/ou correspondant à 50% ou moins du poids total de l'élément de chaussure de sport, voire 40% ou moins, voire 30% ou moins ;
- injection dans le même moule d'un second matériau (16) plastique, différent du premier matériau, successivement à l'injection du premier matériau et avant le durcissement total de ce premier matériau selon un principe de co-injection.

13. Procédé de fabrication d'un élément de chaussure de sport selon l'une des revendications 7 ou 8, **caractérisé en ce qu'**il comprend les étapes suivantes :
- co-injection des deux matériaux par deux points d'injection (17, 18) disposés en deux points distincts d'un moule destiné à la fabrication d'un bas de coque de chaussure de ski, ces deux points se positionnant sur deux hauteurs différentes en partie arrière du bas de coque, et/ou un, deux, trois, quatre ou cinq points d'injection (19 ; 20 ; 21 ; 22) disposés en plusieurs points distincts d'un moule destiné à la fabrication d'un bas de coque (3) de chaussure de ski, ces différents points d'injection se positionnant sous la semelle du bas de coque.

14. Procédé de fabrication d'un élément de chaussure de sport selon l'une des revendications 9 ou 10, **caractérisé en ce qu'**il comprend les étapes suivantes :
- co-injection des deux matériaux par deux ou trois points d'injection (26 ; 27 ; 28) disposés en plusieurs points distincts d'un moule destiné à la fabrication d'un collier de chaussure de ski, ces différents points se positionnant sur des hauteurs différentes en partie arrière du collier.

15. Procédé de fabrication d'un élément de chaussure de sport selon l'une des revendications 12 à 14, **caractérisé en ce qu'**il comprend la co-injection des deux matériaux (15, 16) par les mêmes points d'injection et/ou la co-injection générant l'injection du deuxième matériau au travers du premier matériau.

## Patentansprüche

1. Sport-Schuh-Element, dessen Wand mindestens zwei verschiedene Kunststoffmaterialien (15, 16) umfasst, die mittels Ko-Injektion durch mehrere Einspritzpunkte co-injiziert werden, wobei zwei aufeinanderfolgende Einspritzungen nach dem Ko-Injektionsverfahren erfolgen, **dadurch gekennzeichnet, dass** die Wand umfasst:
- einen ersten Bereich (11), der beide verschiedenen Kunststoffmaterialien über seine Dicke hinweg umfasst, wobei das erste Kunststoffmaterial (15) zwei Schichten der Wand bildet, welche die innere und äußere Oberfläche der genannten Wand bilden, und das zweite Kunststoffmaterial (16) zwischen den beiden Schichten des ersten Kunststoffmaterials (15) angeordnet ist, und
- einen zweiten Bereich (13), der ausschließlich das zweite Kunststoffmaterial (16) umfasst, wobei das erste Material steifer ist als das zweite Material.

2. Sport-Schuh-Element nach Anspruch 1, **dadurch gekennzeichnet, dass** sich das zweite Material (16) kontinuierlich vom ersten Bereich (11) bis zum zweiten Bereich (13) erstreckt.

3. Sport-Schuh-Element nach einem der vorhergehenden Ansprüche, **dadurch gekennzeichnet, dass** seine Wand eine unregelmäßige, nicht glatte Grenzlinie (14) zwischen den beiden Bereichen (11, 13) aufweist und/oder einen Zwischenbereich (12), der auf der sichtbaren Außenfläche des Elements eine Mischung der beiden Materialien (15, 16) und/oder einen Wechsel zwischen den beiden Materialien aufweist.

4. Sport-Schuh-Element nach einem der vorhergehenden Ansprüche, **dadurch gekennzeichnet, dass** das erste Material 50 % oder weniger des Gesamtgewichts des Schuh-Elements ausmacht, vorzugsweise 40 % oder weniger, noch bevorzugter 30 % oder weniger.

5. Sport-Schuh-Element nach einem der vorhergehenden Ansprüche, **dadurch gekennzeichnet, dass** das steifere erste Material eine Härte zwischen 50 und 70 ShD, vorzugsweise zwischen 55 und 60 ShD aufweist, und/oder dass das weichere zweite Material eine Härte zwischen 40 und 60 ShD, vorzugsweise zwischen 45 und 50 ShD aufweist.

6. Sport-Schuh-Element nach einem der vorhergehenden Ansprüche, **dadurch gekennzeichnet, dass** das steifere erste Material die Seitenränder der Schuhsohle bildet.

7. Sport-Schuh-Element nach einem der vorhergehenden Ansprüche, **dadurch gekennzeichnet, dass** es sich um ein Schuhunterteil (3) handelt.

8. Sport-Schuh-Element nach Anspruch 7, **dadurch gekennzeichnet, dass** das Schuhunterteil (3) einen steiferen ersten Bereich (11) im hinteren Teil und/oder im unteren Teil des Schuhunterteils aufweist und einen weicheren zweiten Bereich (13) im Bereich der Laschen (9) und/oder des Spanns.

9. Sport-Schuh-Element nach einem der Ansprüche 1 bis 6, **dadurch gekennzeichnet, dass** es sich um einen Schaft eines Sportschuhs handelt.

10. Sport-Schuh-Element nach Anspruch 9, **dadurch gekennzeichnet, dass** es sich um einen Schaft (2) eines Sportschuhs handelt und einen steiferen ersten Bereich (11) im hinteren Teil sowie einen weicheren zweiten Bereich (13) im Bereich seitlicher Laschen (25) aufweist.

11. Sportschuh, insbesondere Skischuh, **dadurch gekennzeichnet, dass** er mindestens ein Element nach einem der vorhergehenden Ansprüche umfasst.

12. Verfahren zur Herstellung eines Sport-Schuh-Elements nach einem der Ansprüche 1 bis 10, **dadurch gekennzeichnet, dass** es folgende Schritte umfasst:
- Einspritzen eines ersten Kunststoffmaterials (15) in eine Form, wobei das Material nicht die gesamte Oberfläche der Form ausfüllt und/oder 50 % oder weniger des Gesamtgewichts des Sportschuh-Elements ausmacht, vorzugsweise 40 % oder weniger, noch bevorzugter 30 % oder weniger;
- Einspritzen eines zweiten Kunststoffmaterials (16), das sich vom ersten Material unterscheidet, in dieselbe Form, unmittelbar nach der Einspritzung des ersten Materials und vor dessen vollständiger Aushärtung, gemäß einem Ko-Injektionsprinzip.

13. Verfahren zur Herstellung eines Sport-Schuh-Elements nach einem der Ansprüche 7 oder 8, **dadurch gekennzeichnet, dass** es folgende Schritte umfasst:
- Ko-Injektion der beiden Materialien über zwei Einspritzpunkte (17, 18), die an zwei unterschiedlichen Punkten einer Form zur Herstellung eines Schuhunterteils eines Skischuhs angeordnet sind, wobei sich diese beiden Punkte in unterschiedlichen Höhen im hinteren Bereich des Schuhunterteils befinden, und/oder über ein, zwei, drei, vier oder fünf Einspritzpunkte (19; 20; 21; 22), die an mehreren unterschiedlichen Punkten einer Form zur Herstellung eines Schuhunterteils (3) eines Skischuhs angeordnet sind, wobei sich diese verschiedenen Einspritzpunkte unter der Sohle des Schuhunterteils befinden.

14. Verfahren zur Herstellung eines Sport-Schuh-Elements nach einem der Ansprüche 9 oder 10, **dadurch gekennzeichnet, dass** es folgende Schritte umfasst:
- Ko-Injektion der beiden Materialien über zwei oder drei Einspritzpunkte (26; 27; 28), die an mehreren unterschiedlichen Punkten einer Form zur Herstellung eines Schafts eines Skischuhs angeordnet sind, wobei sich diese verschiedenen Einspritzpunkte in unterschiedlichen Höhen im hinteren Bereich des Schafts befinden.

15. Verfahren zur Herstellung eines Sport-Schuh-Elements nach einem der Ansprüche 12 bis 14, **dadurch gekennzeichnet, dass** die Ko-Injektion der beiden Materialien (15, 16) über dieselben Einspritzpunkte erfolgt und/oder die Ko-Injektion die Einspritzung des zweiten Materials durch das erste Material hindurch erzeugt.

## Claims

1. Sports boot element of which the wall comprises at least two different plastics materials (15, 16) co-injection moulded through multiple injection points receiving two successive injections according to the co-injection moulding technique, **characterized in that** the wall comprises:
- a first zone (11) comprising the two different plastics materials within its thickness, the first plastics material (15) forming two layers of the wall constituting the internal and external faces of the said wall, and the second plastics material (16) being interposed between the two layers of the first plastics material (15), and
- a second zone (13) comprising only the second plastics material (16),
the first material being more rigid than the second material.

2. Sports boot element according to the preceding claim, **characterized in that** the second material (16) extends continuously from the first zone (11) to the second zone (13).

3. Sports boot element according to the preceding claim, **characterized in that** its wall comprises an irregular, non-smooth frontier (14) between the two zones (11, 13) and/or an intermediate zone (12) comprising, on the visible external surface of the element, a mixture of the two materials (15, 16) and/or an alternation of the two materials.

4. Sports boot element according to one of the preceding claims, **characterized in that** the first material represents 50% or less of the total weight of the boot element, or even 40% or less or even 30% or less.

5. Sports boot element according to one of the preceding claims, **characterized in that** the more rigid first material has a hardness comprised between 50 and 70 ShD inclusive, or even between 55 and 60 ShD inclusive, and/or **in that** the more flexible second material has a hardness comprised between 40 and 60 ShD inclusive, or even between 45 and 50 ShD inclusive.

6. Sports boot element according to one of the preceding claims, **characterized in that** the more rigid first material forms the curbs of the boot element.

7. Sports boot element according to one of the preceding claims, **characterized in that** it is a lower shell (3).

8. Sports boot element according to the preceding claim, **characterized in that** the lower shell (3) has a more rigid first zone (11) at the rear part and/or at the lower part of the bottom shell, and has a more flexible second zone (13) in the region of the flaps (9) and/or of the instep.

9. Sports boot element according to one of claim 1 to 6, **characterized in that** it is a sports boot cuff.

10. Sports boot element according to the preceding claim, **characterized in that** it is a sports boot cuff (2) and has a more rigid first zone (11) in the rear part and has a more flexible second zone (13) in the region of lateral flaps (25).

11. Sports boot, notably ski boot, **characterized in that** it comprises at least one element according to one of the preceding claims.

12. Method for manufacturing a sports boot element according to one of claims 1 to 10, **characterized in that** it comprises the following steps:
- injecting a first plastics material (15) in a mould, not occupying the entire surface of the mould and/or corresponding to 50% or less of the total weight of the sports boot element, or even 40% or less, or even 30% or less;
- injecting into the same mould a second plastics material (16), different from the first material, after the injection of the first material and before this first material has completely hardened, using a co-injection moulding principle.

13. Method for manufacturing a sports boot element according to one of Claims 7 or 8, **characterized in that** it comprises the following steps:
- co-injection moulding the two materials from two injection points (17, 18) located at two distinct points of a mould intended for the manufacture of a lower shell of a ski boot, these two points being positioned at two different heights at the rear part of the lower shell, and/or one, two, three, four or five injection points (19; 20; 21; 22) located at several distinct points of a mould intended for the manufacture of a ski boot lower shell (3), these various injection points being positioned underneath the sole of the lower shell.

14. Method for manufacturing a sports boot element according to one of Claims 9 or 10, **characterized in that** it comprises the following steps:
- co-injection moulding of the two materials using two or three injection points (26; 27; 28) located at several distinct points of a mould intended for the manufacture of a ski boot cuff, these various points being positioned at different heights in the rear part of the cuff.

15. Method for manufacturing a sports boot element according to claims 12 to 14, **characterized in that** it comprises the co-injection moulding of the two materials (15, 16) using the same injection points and/or the co-injection moulding involving injecting the second material through the first material.
